# EUROPEAN PATENT SPECIFICATION

(11) **EP 2 869 266 B1**
(45) Date of publication and mention of the grant of the patent: **18.10.2017**
(21) Application number: 14190319.5
(22) Date of filing: 24.10.2014
(51) Int. Cl.: G06T 7/521

(54) **Method and apparatus for generating depth map of a scene**
Verfahren und Vorrichtung zur Erzeugung einer Tiefenkarte einer Szene
Procédé et appareil de génération de carte de profondeur d'une scène

(30) Priority: 29.10.2013 EP 13290259
(43) Date of publication of application: 06.05.2015
(73) Proprietor: Thomson Licensing, 92130 Issy-les-Moulineaux (FR)
(72) Inventor: Jouet, Pierrick, 35576 Cesson Sévigné (FR); Alleaume, Vincent, 35576 Cesson Sévigné (FR); Baillard, Caroline, 35576 Cesson Sévigné (FR)
(74) Representative: Huchet, Anne

(56) References cited:
- KONINCKX T P ET AL: "Real-Time Range Acquisition by Adaptive Structured Light", PATTERN ANALYSIS AND MACHINE INTELLIGENCE, IEEE TRANSACTIONS ON, IEEE SERVICE CENTER, LOS ALAMITOS, CA, US, vol. 28, no. 3, 20 March 2006 (2006-03-20) , pages 432-445, XP001523338, ISSN: 0162-8828, DOI: 10.1109/TPAMI.2006.62
- YI XU ET AL: "An Adaptive Correspondence Algorithm for Modeling Scenes with Strong Interreflections", IEEE TRANSACTIONS ON VISUALIZATION AND COMPUTER GRAPHICS, IEEE SERVICE CENTER, LOS ALAMITOS, CA, US, vol. 15, no. 3, 1 May 2009 (2009-05-01), pages 465-480, XP011344543, ISSN: 1077-2626, DOI: 10.1109/TVCG.2008.97
- QIANG LI ET AL: "Dense depth estimation using adaptive structured light and cooperative algorithm", COMPUTER VISION AND PATTERN RECOGNITION WORKSHOPS (CVPRW), 2011 IEEE COMPUTER SOCIETY CONFERENCE ON, IEEE, 20 June 2011 (2011-06-20), pages 21-28, XP031926486, DOI: 10.1109/CVPRW.2011.5981716 ISBN: 978-1-4577-0529-8

## Description

### TECHNICAL FIELD

The present invention generally relates to 3D computer graphics. In particular, the present invention relates to a method and apparatus for generating the depth map of a scene.

### BACKGROUND

In 3D computer graphics, a depth map is an image that contains depth information relating to the distance of the surfaces of objects in a scene from a viewpoint. The depth map is normally a 2D image, which has pixel values corresponding to the distance, e.g., brighter values mean shorter distance, or vice versa.

The depth information contained in the depth map may have several uses. For example, it can be used to simulate the effect of uniformly dense semi-transparent media within a scene, such as fog or smoke.

The Kinect system of Microsoft proposed to use a structured light to build the depth map of a scene. The structured light approach means the process of projecting a known pattern of pixels (often grids or horizontal bars) onto a scene. The way a light pattern deforms when striking the surfaces of the scene allows a vision system to calculate the depth information of the points/objects in the scene.

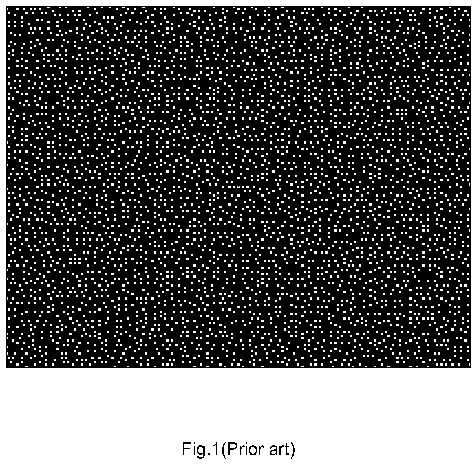

Specifically, in the structured light approach of the Kinect system, there is a light source which projects specifically designed 2D patterns onto a scene. Normally an IR (Infrared Ray) point projection is used for the Kinect system. The projection may be merely a pseudo random layout of points, leading each area of the scene to be lighted by the layout pattern of a unique point. Figure 1 is an exemplary diagram showing a pattern of IR point projection illuminated onto a scene. The scene under illumination will be captured by an image sensor. In a case that the above-mentioned IR point projection is used as the light source, the image sensor may be an IR capture sensor(an IR camera, for example). Each unique pattern will be uniquely identified through images of the IR capture sensor, even in case of alteration coming from the depth changes in the scene area. Depth information is then measured by the shift between the projected and captured patterns through the triangulation principle. In the example of the IR point projection of the Kinect system, the scene with the players is bombarded by non-visible IR light. Part of this radiation will be reflected by all affected surfaces. The amount of reflected IR radiation (referred to the IR camera) depends on the distance of the object. For a farther object is, the amount of reflected infrared radiation will be less. In contrast, for close objects, the amount of reflected infrared radiation will be important. Thus, the IR camera will measure the distance to the object based on intensity.

The structured light approach is now widely used, particularly in the field of cinema. An article "Real-Time Range Acquisition by Adaptive Structured Light" by Thomas P. Koninckx et al., IEEE Transactions on Pattern Analysis and Machine Intelligence, vol. 28, no. 3, 2006, pp. 432 - 445, provides a "self-adaptive" system for real-time range acquisition, wherein reconstructions are based on a single frame structured light illumination. It discusses the dynamic adaptation of the projected pattern for the range acquisition. An article "An adaptive Correspondence Algorithm for Modeling Scenes with Strong Interreflections" by Yi Xu et al., IEEE Transactions on Visualization and Computer Graphics, vol. 15, no. 3, 2009, pp. 465 - 480, disclosed a method for modeling realworld scenes by projecting binary patterns in order to obtain correspondence and reconstruct a densely sampled 3D model. It proposes to correctly establish the lower and upper bounds of the possible intensity values of an illuminated pixel and of a nonilluminated pixel. An article "Densedepth estimation using adaptive structured light and cooperative algorithm" by Qiang Li et al., IEEE Computer Society Conference on Computer Vision and Pattern Recognition Workshops, 2011, pp. 21 - 28, proposes a depth estimation approach using adaptive structured light. It disclosed the using of inverse principle component analysis on the images with structured light to maximally retrieve desirable structured light information. In the conventional structured light approach for producing the depth map of a scene, the scene is illuminated by a structured light with homogeneous density. For example, objects in the background and foreground of the scene are projected with a pattern with the same density. Then the measured deformation allows the calculation of a depth map as described above.

However, in the conventional structured light approach, a structured light pattern with homogeneous density is projected onto a scene. This means that the same pattern of light, of which the density might be associated to the number of points/objects of a given scene, will be used for all points/objects of the scene, regardless of the distances of objects to a viewpoint. One of the problems of such structured light approach is the precision loss for farthest objects. It can be appreciated that the definition of farthest objects is already worse than for that of closest objects with the homogeneous density projection.

### SUMMARY

In view of the above problem in the conventional technologies, the invention provides a method and apparatus for generating the depth map of a scene, which uses a structured light pattern with a heterogeneous density to project onto the scene. The density of the light pattern is dynamically adapted to at least one area of the scene divided by a depth segmentation as a function of the depth value of the at least one area. The invention can provide a controllable pattern projection with regard to expected depth precision and allow a more detailed analysis during the generation of the depth map of a scene.

According to one aspect of the invention, a method for generating the depth map of a scene is provided. The method comprises the steps of: projecting a structured light pattern with first density onto the scene to obtain a first depth map; segmenting the scene into at least one area based on the depth information in the first depth map; and projecting a structured light pattern with a density which is different from the first density onto the scene by adapting the density of the light pattern to the at least one area of the scene to obtain a second depth map of the scene.

According to one aspect of the invention, an apparatus for generating the depth map of a scene is provided. The method comprises: a pattern projector for projecting a structured light pattern towards a scene; an image sensor for capturing an image of the scene under illumination of the projected structured light pattern; a depth information unit for obtaining the depth information of the scene by measurement of deformation between the projected structured light pattern and the captured light pattern by the image sensor to generate a depth map of the scene; and a control unit for adapting the density of the projected structured light pattern to respective areas of the scene as a function of the average depth values of the areas..

It is to be understood that more aspects and advantages of the invention will be found in the following detailed description of the present invention.

### BRIEF DESCRIPTION OF THE DRAWINGS

The accompanying drawings are included to provide further understanding of the embodiments of the invention together with the description which serves to explain the principle of the embodiments. The invention is not limited to the embodiments.

In the drawings:
Figure 1 is an exemplary diagram showing a pattern of IR point projection illuminated onto a scene;
Figure 2 is a flow chart showing a method for generating the depth map of a scene according to an embodiment of the invention;
Figure 3 is an exemplary diagram showing the structured light pattern with homogeneous density.
Figure 4 is an exemplary diagram showing the output of the depth segmentation with rectangular bounding boxes;
Figure 5 is an exemplary diagram showing a light pattern with adaptive density;
Figure 6(a), (b) and (c) are exemplary diagrams showing the process for generating a depth map of a specific scene; and
Figure 7 is a block diagram of an apparatus for generating the depth map of a scene according to an embodiment of the invention.

### DETAILED DESCRIPTION

An embodiment of the present invention will now be described in detail in conjunction with the drawings. In the following description, some detailed descriptions of known functions and configurations may be omitted for conciseness.

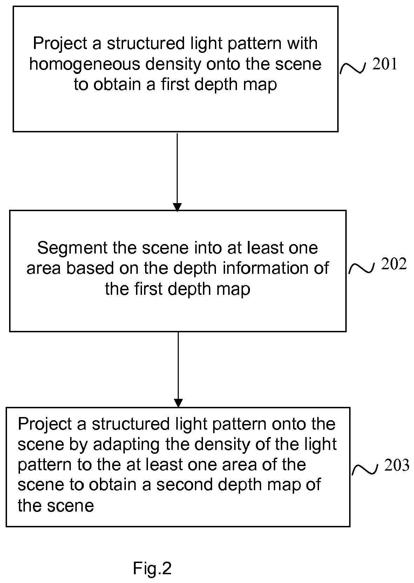

Figure 2 is a flow chart showing a method for generating the depth map of a scene according to an embodiment of the invention.

At step 201, it projects a structured light pattern with homogeneous density onto the scene to obtain a first depth map.

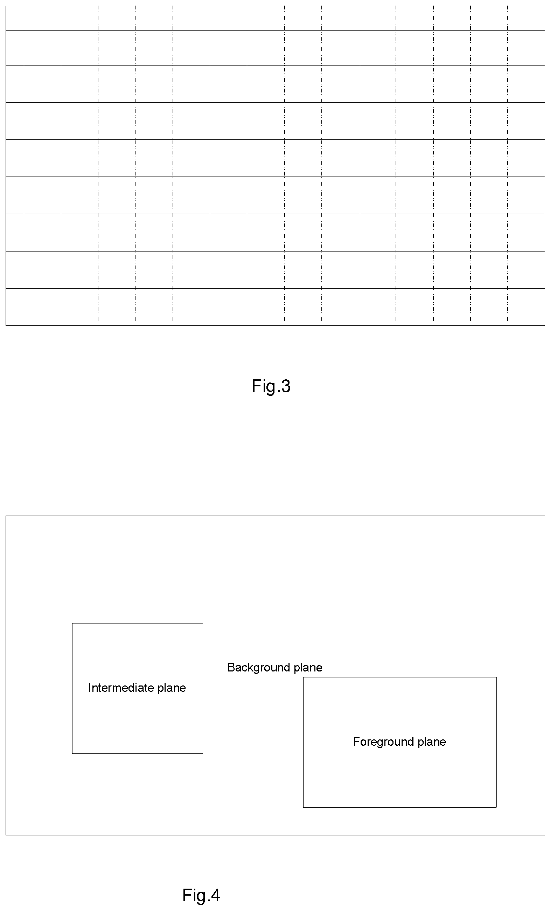

In this step a pattern projector may be used for projecting a structured light pattern towards the scene. Any appropriate lighting source can be used for the pattern projector, including but not limited to an IR projector as described above. In this case, it is appreciated that a light incident from the pattern projector is an IR. The projected pattern can be a layout of points, as described above. Figure 3 is an exemplary diagram showing the structured light pattern with homogeneous density which can be used in the step 201. But it can be appreciated that the pattern can comprise other predetermined shapes.

Deformations of the projected structured light when striking the reflective surface of the scene can be measured by an image obtaining unit. The image obtaining unit could be an image sensor, for example, a camera. In this case, an IR capture sensor is used. The depth information of the scene can be calculated by a measurement of the deformation/shift between the projected structured light pattern and the captured pattern by the image obtaining unit. A first depth map can be generated according to the calculated depth information. It is appreciated that known triangulation algorithms for calculating the depth information according to the captured deformations can be used. No further details will be given in this respect.

At step 202, it segments the scene into at least one area based on the depth information in the first depth map.

The depth information can be the depth values of points of the scene. In this case, the step 202, which can be called depth segmentation hereinafter, may be performed by grouping the points of the scene into a plurality of clusters according to the depth values of the points of the scene provided by the first depth map. A set of points with a same or similar depth value can be grouped into one cluster.

Euclidian distance between points of the scene can be used for the above purpose, that is, to group the points of the scene with a same or similar depth value into clusters. The criteria of Euclidian distance is used to build a cluster, which is built with points having closest distance (di +/- delta). This process can be neighbor constrained to get a homogenous cluster. It can be appreciated that other criteria than Euclidian distance can also be used for the clustering of the points of the scene.

The number of areas to be segmented can be determined according to the complexity of the scene. A parameter relevant to the complexity of the scene can be set by a user. The complexity of the scene may relate to the number and size of the objects in the scene and distance difference between these objects. For example, a scene with lots of objects at different distances is considered to be complex and a scene with small object is also considered to be complex. A scene which is more complex can be segmented into more number of areas.

For example, it can be appreciated that a result of a basic segmentation of a scene based on the depth value is the background area and the foreground area of the scene.

Figure 4 is an exemplary diagram showing an example of the result of the depth segmentation with rectangular bounding boxes. As shown in Figure 4, a scene can be segmented into three areas according to the depth information provided in the first depth map, which are indicated as the foreground plane, the background plane and the intermediate plane. The segmentation can be performed by clustering the points of the scene according to the depth values of these points provided by the first depth map. Points with the same or similar depth values are grouped into one cluster, that is, for one of areas of the foreground plane, the background plane and the intermediate plane. In Figure 4, the scene is segmented into areas defined by rectangular bounding boxes. A rectangular bounding shape is a simple kind of bounding box used for the depth segmentation. But it can be appreciated by a person skilled in the art that other shapes can also be used.

To manage border areas, the resulting foreground region can be enlarged to have a safety margin so that oscillation can be avoided.

For example, the rectangular bounding boxes can be built around segmented blobs, or a morphological erosion of the segmented depth image can be performed.

At step 203, it projects a structured light pattern with a heterogeneous density onto the scene by adapting the density of the light pattern to the at least one area of the scene to obtain a second depth map of the scene.

It can be appreciated that the accuracy of the depth map is dependent on the density of the light pattern. A dense pattern will provide higher accuracy than a sparse pattern.

According to the embodiment of the present invention, the density of the projected light pattern can be locally adapted to respective segmented areas of the scene according to the depth values of the areas. The above depth value for the adaption can be the average value of all or part of the points of an area.

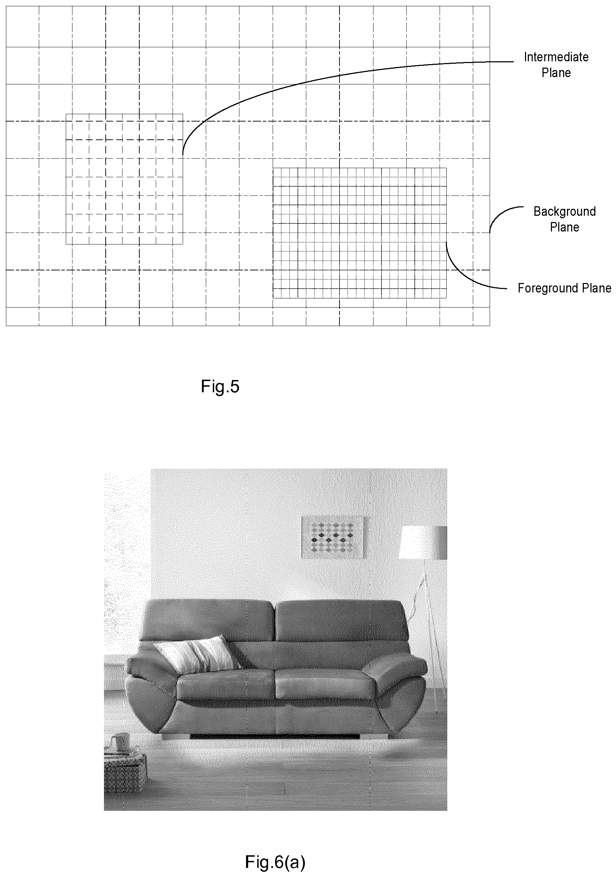

Figure 5 is an exemplary diagram showing a light pattern with adaptive density for the segmented areas shown in Figure 4. As shown in Figure 5, the density of the projected light pattern is adapted to the segmented areas (in this case, the foreground plane, the background plane and the intermediate plane) according to the average depth values of these areas of the first depth map.

It can be appreciated that objects in an area of the scene with smaller average depth values require a better accuracy than those in an area of the scene with larger average depth values. In addition, the background area of a scene will have the largest average depth value and the foreground area of the scene will have the smallest average depth value. Therefore, according to an embodiment of the invention, the density of the projected light pattern can be increased for anyone or all of the segmented areas with smaller average depth values over the background area(those areas are considered to be closer to the viewpoint). In a more specific embodiment, the density of the projected light pattern can be increased only for one of the segmented areas with the smallest average depth value (this area is considered to be the closest one to the viewpoint).

As shown in Figure 5, since the foreground plane and the intermediate plane have smaller average depth values (that is, closer to the view point), the densities of the projected light pattern are increased respectively for these two areas. For the background plane, the density of the projected light pattern can remain unchanged over that of the initial light pattern. It can be appreciated that Figure 5 only shows one example of the density adaption. Other adaption can also be applied. For example, it is also possible to only increase the density of the projected light pattern for the foreground plane, which is the closest area.

In some context, it may need to have a homogeneous scan of the scene. In such case, the density adaption can be performed reciprocally over the above-described example. Specifically, the density of the projected light pattern will be increased respectively for anyone or all of the segmented areas with larger average depth values over the foreground area (those areas are considered to be farther from the viewpoint) and decreased respectively for anyone or all of the segmented areas with smaller average depth values over the background area (those areas are considered to be closer to the viewpoint). More specifically, for the result of the depth segmentation shown in Figure 4, the density of the projected light pattern will be increased for the background plane and decreased for the foreground plane. With such density adaption, a similar accuracy can be achieved in the background and in the foreground (within the limits of the device).

In the method described with reference to Figure 2, the step 202 of the depth segmentation can be updated at every frame, and the density of the light pattern is adapted accordingly.

For moving objects in the scene, the position of segmented areas can be controlled by a tracking process.

There is a possibility for a new element to enter or leave the capture area. In this case, an inconsistency can be detected, and then the point clustering can be updated accordingly and the density of the light pattern is reviewed to maintain the desired density.

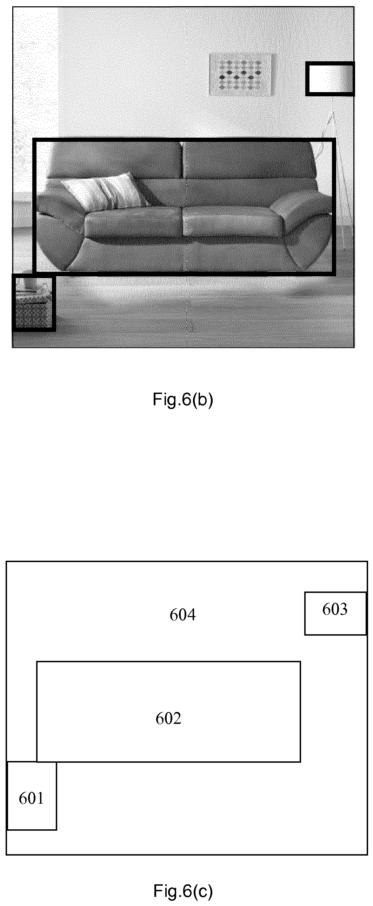

Next, the process for generating a depth map of an exemplary scene will be described with reference to Figures 6(a), 6(b) and 6(c).

Figure 6(a) shows an exemplary scene, of which a depth map will be generated. The scene shows a part of a living room, wherein a floor lamp, a sofa and a coffee table are placed in front of a wall. There is also a picture frame pinned up on the wall.

According to the method of the embodiment of the invention as described above, firstly a first depth map of the scene is generated by projecting a structured light pattern with homogeneous density onto the scene. Then the scene was segmented into several areas based on the depth information of the first depth map. Figure 6(b) shows the depth segmentation of the scene. As shown in Figure 6(b), the scene is segmented into four areas which basically correspond respectively to the floor lamp, the sofa, the coffee table and the background plane, for example, by a clustering of the points of the scene as a function of their depth values available from the first depth map. Since the picture frame on the wall has similar depth values as that of the wall, no additional area is segmented and they are both segmented into the background plane.

Then a structured light pattern with a heterogeneous density is projected onto the scene by adapting the density of the light pattern to the four segmented areas of the scene as according to their depth values, by which a second depth map of the scene was obtained. Figure 6(c) is an exemplary diagram showing the adaption of the density of the light pattern for the segmented areas of the scene. As shown in Figure 6(c), the density of the projected light pattern is locally adapted to the four segmented areas of the scene. As described in the above example, the densities 601, 602 and 603 of the projected light pattern can be increased for anyone or all of the three segmented areas with smaller average depth values (except for the background area) to achieve a better accuracy of the depth map. Alternatively, the density 604 of the projected light pattern can be increased for the background area, and the density 601 is decreased for the foreground area (coffee table) to achieve a similar accuracy in the background and in the foreground of the scene.

With the method according to the embodiment of the present invention, the precision of the depth map for close objects can be increased, or alternatively the depth accuracy over the whole scene can be homogenized. Additionally, compared to a conventional approach with high density patterns, the calculation of the depth map is easier, which will reduce the computation time.

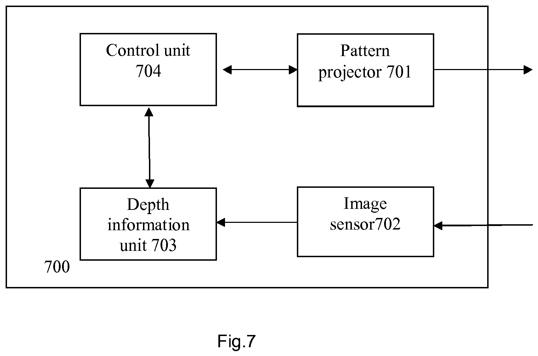

Figure 7 is a block diagram of an apparatus for implementing the method for generating the depth map of a scene according to an embodiment of the invention.

As shown in Figure 7, the apparatus 700 comprises a pattern projector 701 for projecting a structured light pattern towards a scene. As described above, the pattern projector can illuminate any appropriate light, including but not limited to an IR light.

The apparatus 700 comprises an image sensor 702 for capturing an image of the scene under illumination of the projected structured light pattern.

The apparatus 700 further comprises a depth information unit 703 for obtaining the depth information of the scene by measurement of deformation between the projected structured light pattern and the captured light pattern by the image sensor 702 to generate a depth map of the scene.

As shown in Figure 7, the apparatus 700 comprises a control unit 704 for implementing the method of the embodiment of the invention describe above to adapt the density of the projected structured light pattern to respective areas of the scene as a function of the depth values of the areas. Specifically, under the control of the control unit 704, the pattern projector 701 will firstly project a structured light pattern with homogeneous density onto the scene. A first depth map will be generated by the depth information unit 703 by measurement of deformation between the projected structured light pattern and the captured light pattern by the image sensor 702. The control unit 704 segments the scene into at least one area based on the depth information of the first depth map and instructs the pattern projector 701 to project a structured light pattern with a heterogeneous density onto the scene, which is adapted to the at least one area of the scene as a function of the depth value. The depth information unit 703 will generate a second depth map by measurement of deformation between the newly projected structured light pattern and the captured light pattern by the image sensor 702.

It is to be understood that the present invention may be implemented in various forms of hardware, software, firmware, special purpose processors, or a combination thereof, for example, within any one or more of the plurality of 3D display devices or their respective driving devices in the system and/or with a separate server or workstation. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It is to be further understood that, because some of the constituent system components and method steps depicted in the accompanying figures are preferably implemented in software, the actual connections between the system components (or the process steps) may differ depending upon the manner in which the present invention is programmed. Given the teachings herein, one of ordinary skill in the related art will be able to contemplate these and similar implementations or configurations of the present invention.

## Claims

1. A method for generating the depth map of a scene, comprising:
projecting (201) a structured light pattern with a first density onto the scene to obtain a first depth map;
segmenting (202) the scene into at least one area based on the depth information in the first depth map; and
projecting (203) a structured light pattern with a second density which is different from the first density onto the scene by adapting the density of the light pattern to the at least one area of the scene to obtain a second depth map of the scene.

2. Method according to claim 1, wherein the first density is homogeneous and the second density is heterogeneous.

3. Method according to claim 1, wherein the depth information is the depth value of a point of the scene.

4. Method according to claim 3, wherein the segmentation comprises grouping the points of the scene into clusters, each of which has a same or similar depth value

5. Method according to claim4, wherein the grouping is based on the Euclidian distance between the depth values of points of the scene.

6. Method according to claim 1, wherein the density of the light pattern is adapted as a function of the average depth values of the at least one area.

7. Method according to claim 6, wherein the density of the light pattern is increased for anyone or all of the at least one area except for the area with the largest average depth values farthest from a viewpoint over the scene.

8. Method according to claim 7, the density of the light pattern is increased only for one of the at least one area with the smallest average depth value closest to the viewpoint over the scene.

9. Method according to claim6, the density of the projected light pattern is increased for one of the at least one area with the largest average depth value farthest from a viewpoint over the scene and decreased for one of the at least one area with the smallest average depth value closest to the viewpoint over the scene.

10. Method according to claim 1, wherein the scene is segmented into areas which are bounded by rectangular bounding shapes.

11. Method according to claim 1, wherein the number of the segmented areas is set according to the complexity of the scene.

12. Method according to claim 11, the complexity of the scene relates to the number and size of the objects in the scene and distance difference between the objects.

13. An apparatus for generating the depth map of a scene, comprising
a pattern projector (701) for projecting a structured light pattern towards a scene;
an image sensor (702) for capturing an image of the scene under illumination of the projected structured light pattern;
a depth information unit (703) for obtaining the depth information of the scene by measurement of deformation between the projected structured light pattern and the captured light pattern by the image sensor (702) to generate a depth map of the scene; and
a control unit (704) for adapting the density of the projected structured light pattern to respective areas of the scene as a function of the average depth values of the areas.

14. Apparatus according to claim 13, further comprising, under the control of the control unit (704):
the pattern projector (701) projecting a structured light pattern with homogeneous density onto the scene to obtain a first depth map;
the image sensor (702) capturing an image of the scene under illumination of the projected structured light pattern;
the depth information unit (703) obtaining the depth information of the scene to generate a first depth map of the scene;
the control unit (704) segmenting the scene into at least one area based on the depth information of the first depth map and adapting the density of the light pattern to the at least one area of the scene as a function of the depth value;
the pattern projector (701) projecting (203) structured light pattern with an adapted density onto the scene;
the image sensor (702) capturing an image of the scene under illumination of the adapted structured light pattern; and
the depth information unit (703) obtaining the depth information of the scene to generate a second depth map of the scene.

15. Apparatus according to claim 13, wherein the pattern projector (701) is an IR projector and the image sensor (702) is an IR camera.

## Patentansprüche

1. Verfahren zum Erzeugen der Tiefenkarte einer Szene, wobei das Verfahren umfasst:
Projizieren (201) eines strukturierten Lichtmusters mit einer ersten Dichte auf die Szene, um eine erste Tiefenkarte zu erhalten;
Segmentieren (202) der Szene in mindestens einen Bereich auf der Grundlage der Tiefeninformationen in der ersten Tiefenkarte; und
Projizieren (203) eines strukturierten Lichtmusters mit einer zweiten Dichte, die von der ersten Dichte verschieden ist, auf die Szene durch Anpassen der Dichte des Lichtmusters an den mindestens einen Bereich der Szene, um eine zweite Tiefenkarte der Szene zu erhalten.

2. Verfahren nach Anspruch 1, wobei die erste Dichte homogen ist und wobei die zweite Dichte heterogen ist.

3. Verfahren nach Anspruch 1, wobei die Tiefeninformationen der Tiefenwert eines Punkts der Szene sind.

4. Verfahren nach Anspruch 3, wobei die Segmentierung das Gruppieren der Punkte der Szene, von denen jeder einen selben oder ähnlichen Tiefenwert aufweist, in Cluster umfasst.

5. Verfahren nach Anspruch 4, wobei das Gruppieren auf dem euklidischen Abstand zwischen den Tiefenwerten der Punkte der Szene beruht.

6. Verfahren nach Anspruch 1, wobei die Dichte des Lichtmusters in Anhängigkeit von den durchschnittlichen Tiefenwerten des mindestens einen Bereichs angepasst wird.

7. Verfahren nach Anspruch 6, wobei die Dichte des Lichtmusters für irgendeinen oder alle des mindestens einen Bereichs mit Ausnahme des Bereichs mit den größten durchschnittlichen Tiefenwerten, die von einem Blickpunkt über die Szene am weitesten entfernt sind, erhöht wird.

8. Verfahren nach Anspruch 7, wobei die Dichte des Lichtmusters nur für einen des mindestens einen Bereichs mit dem kleinsten durchschnittlichen Tiefenwert, der dem Blickpunkt über die Szene am nächsten ist, erhöht wird.

9. Verfahren nach Anspruch 6, wobei die Dichte des projizierten Lichtmusters für einen des mindestens einen Bereichs mit dem größten durchschnittlichen Tiefenwert, der von einem Blickpunkt über die Szene am weitesten entfernt ist, erhöht wird und für einen des mindestens einen Bereichs mit dem kleinsten durchschnittlichen Tiefenwert, der dem Blickpunkt über die Szene am nächsten ist, verringert wird.

10. Verfahren nach Anspruch 1, wobei die Szene in Bereiche segmentiert wird, die durch rechteckige Begrenzungsformen begrenzt sind.

11. Verfahren nach Anspruch 1, wobei die Anzahl der segmentierten Bereiche in Übereinstimmung mit der Komplexität der Szene eingestellt wird.

12. Verfahren nach Anspruch 11, wobei sich die Komplexität der Szene auf die Anzahl und auf die Größe der Objekte in der Szene und auf die Abstandsdifferenz zwischen den Objekten bezieht.

13. Vorrichtung zum Erzeugen der Tiefenkarte einer Szene, wobei die Vorrichtung umfasst:
einen Musterprojektor (701) zum Projizieren eines strukturierten Lichtmusters in Richtung einer Szene;
einen Bildsensor (702) zum Erfassen eines Bilds der Szene unter Beleuchtung des projizierten strukturierten Lichtmusters;
eine Tiefeninformationseinheit (703) zum Erhalten der Tiefeninformationen der Szene durch Messung der Verformung zwischen dem projizierten strukturierten Lichtmuster und dem erfassten Lichtmuster durch den Bildsensor (702), um eine Tiefenkarte der Szene zu erzeugen; und
eine Steuereinheit (704) zum Anpassen der Dichte des projizierten strukturierten Lichtmusters an jeweilige Bereiche der Szene in Abhängigkeit von den durchschnittlichen Tiefenwerten der Bereiche.

14. Vorrichtung nach Anspruch 13, die gemäß der Steuerung der Steuereinheit (704) ferner umfasst, dass:
der Musterprojektor (701) ein strukturiertes Lichtmuster mit homogener Dichte auf die Szene projiziert, um eine erste Tiefenkarte zu erhalten;
der Bildsensor (702) ein Bild der Szene gemäß Beleuchtung des projizierten strukturierten Lichtmusters erfasst;
die Tiefeninformationseinheit (703) die Tiefeninformationen der Szene erhält, um eine erste Tiefenkarte der Szene zu erzeugen;
die Steuereinheit (704) die Szene auf der Grundlage der Tiefeninformationen der ersten Tiefenkarte in mindestens einen Bereich segmentiert und die Dichte des Lichtmusters in Abhängigkeit von dem Tiefenwert an den mindestens einen Bereich der Szene anpasst;
der Musterprojektor (701) strukturierte Lichtmuster mit einer angepassten Dichte auf die Szene projiziert (203);
der Bildsensor (702) ein Bild der Szene gemäß der Beleuchtung des angepassten strukturierten Lichtmusters erfasst; und
die Tiefeninformationseinheit (703) die Tiefeninformationen der Szene erhält, um eine zweite Tiefenkarte der Szene zu erzeugen.

15. Vorrichtung nach Anspruch 13, wobei der Musterprojektor (701) ein IR-Projektor ist und wobei der Bildsensor (702) eine IR-Kamera ist.

## Revendications

1. Procédé pour générer la carte de profondeur d'une scène, comprenant :
- la projection (201) d'un motif de lumière structuré avec une première densité sur la scène pour obtenir une première carte de profondeur ;
- la segmentation (202) de la scène en au moins une zone d'après les informations de profondeur de la première carte de profondeur ; et
- la projection (203) d'un motif de lumière structuré avec une seconde densité, différente de la première densité, sur la scène en adaptant la densité du motif de lumière à la au moins une zone de la scène pour obtenir une seconde carte de profondeur de la scène.

2. Procédé selon la revendication 1, dans lequel la première densité est homogène et la seconde densité est hétérogène.

3. Procédé selon la revendication 1, dans lequel les informations de profondeur sont la valeur de profondeur d'un point de la scène.

4. Procédé selon la revendication 3, dans lequel la segmentation comprend le regroupement des points de la scène en groupes possédant chacun une valeur de profondeur identique ou similaire.

5. Procédé selon la revendication 4, dans lequel le regroupement est basé sur la distance euclidienne entre les valeurs de profondeur des points de la scène.

6. Procédé selon la revendication 1, dans lequel la densité du motif de lumière est adaptée en fonction des valeurs de profondeur moyennes de la au moins une zone.

7. Procédé selon la revendication 6, dans lequel la densité du motif de lumière est augmentée pour tout ou partie de la au moins une zone excepté pour la zone avec les valeurs de profondeur moyennes les plus élevées la plus éloignée d'un point de vue sur la scène.

8. Procédé selon la revendication 7, dans lequel la densité du motif de lumière est augmentée uniquement pour l'une de la au moins une zone avec la valeur de profondeur moyenne la plus faible la plus proche du point de vue sur la scène.

9. Procédé selon la revendication 6, dans lequel la densité du motif de lumière projeté est augmentée pour l'une de la au moins une zone avec la valeur de profondeur moyenne la plus élevée la plus éloignée d'un point de vue sur la scène et réduite pour l'une de la au moins une zone avec la valeur de profondeur moyenne la plus faible la plus proche du point de vue sur la scène.

10. Procédé selon la revendication 1, dans lequel la scène est segmentée en zones délimitées par des formes englobantes rectangulaires.

11. Procédé selon la revendication 1, dans lequel le nombre de zones segmentées est défini en fonction de la complexité de la scène.

12. Procédé selon la revendication 11, dans lequel la complexité de la scène se rapporte au nombre et à la taille des objets de la scène et à la différence de distance entre les objets.

13. Appareil pour générer la carte de profondeur d'une scène, comprenant :
- un projecteur de motif (701) pour projeter un motif de lumière structuré sur une scène ;
- un capteur d'image (702) pour capturer une image de la scène sous l'illumination du motif de lumière structuré projeté ;
- une unité d'informations de profondeur (703) pour obtenir les informations de profondeur de la scène par mesure de la déformation entre le motif de lumière structuré projeté et le motif de lumière capturé par le capteur d'image (702) pour générer une carte de profondeur de la scène ; et
- une unité de contrôle (704) pour adapter la densité du motif de lumière structuré projeté à des zones respectives de la scène en fonction des valeurs de profondeur moyennes des zones.

14. Appareil selon la revendication 13, comprenant en outre, sous le contrôle de l'unité de contrôle (704) :
- le projecteur de motif (701) projetant un motif de lumière structuré avec une densité homogène sur la scène pour obtenir une première carte de profondeur ;
- le capteur d'image (702) capturant une image de la scène sous l'illumination du motif de lumière structuré projeté ;
- l'unité d'informations de profondeur (703) obtenant les informations de profondeur de la scène pour générer une première carte de profondeur de la scène ;
- l'unité de contrôle (704) segmentant la scène en au moins une zone d'après les informations de profondeur de la première carte de profondeur et adaptant la densité du motif de lumière à la au moins une zone de la scène en fonction de la valeur de profondeur ;
- le projecteur de motif (701) projetant (203) un motif de lumière structuré avec une densité adaptée sur la scène ;
- le capteur d'image (702) capturant une image de la scène sous l'illumination du motif de lumière structuré adapté ; et
- l'unité d'informations de profondeur (703) obtenant les informations de profondeur de la scène pour générer une seconde carte de profondeur de la scène.

15. Appareil selon la revendication 13, dans lequel le projecteur de motif (701) est un projecteur infrarouge et le capteur d'image (702) est une caméra infrarouge.
